(19) Europäisches Patentamt
European Patent Office
Office européen des brevets

(11) **EP 2 718 901 B1**

(12) **FASCICULE DE BREVET EUROPEEN**

(45) Date de publication et mention
de la délivrance du brevet:
**12.02.2020 Bulletin 2020/07**

(21) Numéro de dépôt: **12731551.3**

(22) Date de dépôt: **08.06.2012**

(51) Int Cl.:
***G06T 11/00*** *(2006.01)*

(86) Numéro de dépôt international:
**PCT/FR2012/051294**

(87) Numéro de publication internationale:
**WO 2012/168667 (13.12.2012 Gazette 2012/50)**

(54) **PROCEDE DE FABRICATION D'UNE IMAGE IRIDESCENTE, IMAGE OBTENUE ET DISPOSITIF LA COMPRENANT, PROGRAMME ASSOCIE**

VERFAHREN ZUR HERSTELLUNG EINES IRISIERENDEN BILDES, ERHALTENES BILDES UND VORRICHTUNG DAMIT, ZUGEHÖRIGES PROGRAMM

METHOD FOR PRODUCING AN IRIDESCENT IMAGE, IMAGE OBTAINED AND DEVICE INCLUDING SAME, ASSOCIATED PROGRAM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.06.2011 FR 1155003**

(43) Date de publication de la demande:
**16.04.2014 Bulletin 2014/16**

(73) Titulaire: **Media Relief**
**75009 Paris (FR)**

(72) Inventeur: **LANFRANCHI, Christophe**
**F-95530 La Frette Sur Seine (FR)**

(74) Mandataire: **Cabinet Chaillot et al**
**16/20, avenue de l'Agent Sarre**
**B.P. 74**
**92703 Colombes Cedex (FR)**

(56) Documents cités:
**EP-A2- 1 195 721     US-A1- 2003 103 061**

• **SHOUP RICHARD G: "COLOR TABLE ANIMATION", COMPUTER GRAPHICS, ACM, US, vol. 2, no. 13, 1 août 1979 (1979-08-01), pages 8-13, XP002075128, ISSN: 0097-8930, DOI: 10.1145/965103.807418**
• **ROBERT L KOOIMA ET AL: "A GPU Sub-pixel Algorithm for Autostereoscopic Virtual Reality", VIRTUAL REALITY CONFERENCE, 2007. VR '07. IEEE, IEEE, PI, 1 mars 2007 (2007-03-01), pages 131-137, XP031080304, ISBN: 978-1-4244-0905-1**
• **Lantor Limited: "3D Lenticular Check Book Cover, Changing colors between yellow, orange, and black when tilted", , 3 December 2008 (2008-12-03), pages 1-2, XP55483093, Retrieved from the Internet: URL:https://web.archive.org/web/2008120323 2020/http://www.lantorlimited.com/3D_Lenti cular_Check_Book_Cover_Changing_colors_p/ r -004-cbc.htm [retrieved on 2018-06-11]**

## Description

### DOMAINE TECHNIQUE DE L'INVENTION

L'invention se rapporte au domaine de la création d'images iridescentes. L'effet d'iridescence intervient lorsque nos yeux, distants l'un de l'autre, perçoivent d'un même objet des couleurs et/ou des intensités lumineuses différentes. De telles images sont par exemple utilisées pour réaliser un affichage plus esthétique sur des emballages de produits. Ainsi, il en résulte des effets accrocheurs et marquants pour le consommateur.

Une image de ce type peut aussi être prévue sur une carte bancaire ou téléphonique, une vitrine, une décoration, un dossier de presse, une carte de vœux, un marquage de vêtement ou de chaussure, ou un élément de communication tel qu'une carte commerciale. On peut encore prévoir ce type d'effet dans des images en 3D, par exemple dans un cinéma en 3D ou des jeux en 3D etc.

### ETAT DE LA TECHNIQUE ANTERIEURE

De nombreuses méthodes de création d'images à effet moiré ont été proposées. Ainsi, on connaît par le document EP 1 147 878, un motif moiré ou iridescent fabriqué à partir d'une matrice d'éléments lenticulaires imprimée sur au moins une surface d'un substrat. Ce dispositif ne s'avère cependant pas pleinement satisfaisant. En effet, ce document ne permet pas de réaliser aisément une image iridescente à partir d'une image de référence donnée telle qu'un dessin, une photographie ou un texte.

Les documents EP 1 195 721 ainsi que "Color table animation", Shoup R. G., Computer Graphics, ACM, vol. 2, no. 13, pp. 8-13, décrivent des méthodes de décalage circulaire des couleurs d'une palette.

Les documents US 2003/0103061 ainsi que"A GPU sub-pixel algorithm for autostereoscopic virtual reality", Kooima R. L. et al, Virtual reality conference 2007, pp. 131-137 décrivent l'entrelacement d'images pour un écran stéréoscopique.

### EXPOSE DE L'INVENTION

L'invention vise à remédier aux inconvénients de l'état de la technique mentionnés ci-dessus et à apporter d'autres types d'applications.

Pour ce faire est proposé un procédé de fabrication d'une série d'au moins deux images de références modifiées destinée à former une image iridescente, à partir d'au moins une image de référence.

De manière générale, le procédé selon l'invention comprend des étapes - de création d'une palette de couleurs - de création d'une série d'au moins deux images de référence modifiées, dans laquelle les couleurs de ladite au moins une image de référence sont remplacées par les couleurs de la palette en effectuant avant ou entre chaque nouvelle image de référence modifiées un décalage circulaire des couleurs de la palette.

Selon un premier aspect de l'invention, le procédé est réalisé à partir d'une image de référence.

Selon un deuxième aspect, le procédé est réalisé à partir d'au moins deux images de référence.

On entend par « image de référence », une image qui représente aux couleurs près, ce que l'on perçoit de l'image iridescente. L'image de référence peut représenter par exemple, un dessin, une photo ou un texte. De préférence le mode de couleur de l'image de référence est adapté au système de reproduction utilisé.

Selon une variante préférée, le procédé comprend en outre une étape d'application d'un flou sur tout ou partie de l'image de référence, avant l'étape de création des images de référence modifiées.

Selon une autre variante préférée, l'étape de création des images de référence modifiées est réalisée au moyen d'au moins un masque couvrant au moins une partie de l'image de référence.

On entend par « image iridescente » la série d'au moins deux images de référence modifiées mise en relation avec un sélecteur optique permettant à un observateur de percevoir avec ses deux yeux des images différentes de ladite série.

On entend par « palette de couleurs » un tableau indexé où chaque valeur du tableau représente une couleur. Les couleurs contenues dans cette palette vont donner leurs couleurs aux effets d'iridescence dans l'image iridescente obtenue.

On entend par « décalage circulaire» une rotation des couleurs de la palette comme si les extrémités gauche et droite de la palette étaient jointe. La couleur qui est insérée à gauche lors d'un décalage à droite est la couleur qui est décalée et sortie à droite et vice et versa.

D'une manière générale le mode de couleur de la palette est adapté au système de reproduction utilisé et peut représenter soit une seule couche de couleur, en bitmap ou en niveau de gris, soit trois couches rouge vert bleu, soit quatre couches cyan magenta jaune noir. Avantageusement, la palette comprend soit une seule couche de couleur, en bitmap ou en niveaux de gris, soit deux couches de couleurs dont la plus claire est une valeur constante sur l'ensemble de ladite palette.

De préférence, le procédé comprend une étape de création d'au moins deux images de référence à partir d'une série d'images de préférence sélectionnée dans le groupe comprenant une série multiscopique, une animation, et l'étape de création d'une série d'images de référence modifiées est alors réalisée sur chacune desdites au moins deux images de référence pour créer pour chacune d'elles au moins une image de référence modifiée.

On entend par « sélecteur optique » un dispositif permettant à un observateur de percevoir avec ses deux yeux des images différentes de la série d'au moins deux images de référence modifiées, lui permettant ainsi de percevoir les effets d'iridescence.

On parle alors de « sélecteur optique autostéréoscopique » lorsque le sélecteur ne nécessite pas de port de lunettes spécifiques ou l'utilisation d'un stéréoscope. Un tel sélecteur optique est par exemple un réseau de lentilles linéaires encore appelé réseau lenticulaire qui comprend des lentilles cylindriques longitudinales. Un tel sélecteur optique peut aussi être un réseau de lentilles sphériques, une barrière de parallaxe. De manière générale, une barrière de parallaxe comprend des lignes, cercles, ellipses, carrés, losanges, zigzags etc, dont la taille et la fréquence sont de préférence fixes, et qui peuvent être imprimés, gravés, moulés, sablés ou déposés à chaud sur ou dans un substrat transparent ou translucide exemple en PVC, verre, plexiglas® (Polyméthacrylate de méthyle)... présentant ainsi une structure périodique de zones transparentes, translucides ou opaques. Le sélecteur optique peut en outre comporter des zones de réserve (masque) si on souhaite que l'image iridescente ne présente pas un effet d'iridescence sur sa totalité.

Un film holographique peut également être considéré comme un sélecteur optique autostéréoscopique. On trouve également des écrans vidéo autostéréoscopiques basés sur l'utilisation de réseaux lenticulaires, de barrières de parallaxe ou d'autres dispositifs.

Un sélecteur optique non autostéréoscopique est par exemple un stéréoscope ou des lunettes stéréoscopiques sélectionnées dans le groupe comprenant des lunettes utilisant des filtres colorés ou polarisants, des lunettes à obturation LCD, des lunettes Infitec®, des lunettes prismatiques.

Selon une première variante avantageuse, le procédé comprend une étape de création d'une image entrelacée à partir desdites images de référence modifiées.

De préférence, le procédé selon cette première variante avantageuse comprend une étape de mise en relation de l'image entrelacée avec un sélecteur optique autostéréoscopique pour obtenir une image iridescente. Un tel sélecteur autostéréoscopique est de préférence sélectionné dans le groupe comprenant un réseau de lentilles cylindriques, un réseau de lentilles sphériques, une barrière de parallaxe, un écran autostéréoscopique.

La mise en relation de l'image entrelacée avec le sélecteur optique afin d'obtenir l'image iridescente peut consister en une reproduction de l'image entrelacée mise en forme de préférence sur la face du sélecteur optique opposée à l'observateur, ou un contre-collage sur cette face en ménageant un espace nécessaire entre le sélecteur optique et l'image entrelacée pour des raisons de focale expliquées plus bas. L'image entrelacée mise en forme peut aussi être reproduite sur une face du sélecteur optique par gravure, moulage, sablage ou tout autre procédé permettant une telle reproduction. Ainsi, la mise en relation consiste par exemple en une reproduction telle qu'une impression, gravure, moulage, sablage. Dans le cas d'une gravure dans un bloc de verre, l'image entrelacée est gravée en laissant une distance focale détaillée plus loin entre la barrière de parallaxe et l'image entrelacée. L'image entrelacée mise en forme peut également être affichée sur un écran autostéréoscopique, l'étape de création de l'image entrelacée sera alors adaptée au type d'écran utilisé.

Selon une deuxième variante avantageuse, la série d'images modifiées est configurée pour être observée à travers un sélecteur non autostéréoscopique de préférence sélectionné dans le groupe comprenant un stéréoscope ou des lunettes stéréoscopiques sélectionnées dans le groupe comprenant des lunettes utilisant des filtres colorés ou polarisants, des lunettes à obturation LCD, des lunettes Infitec®, des lunettes prismatiques. De la même manière, l'image iridescente peut aussi être configurée pour être observée à travers le même type de sélecteur non autostéréoscopique.

De préférence lorsque les images de référence sont constitués d'un couple stéréoscopique ou d'une série multiscopique généré par un programme de création d'images 3D, la création de la série d'images de référence modifiées peut directement être généré par ledit programme en utilisant une palette de couleurs pour les textures de tout ou partie des objets composant la scène et en effectuant un décalage circulaire des couleurs de la palette avant ou entre le calcul de chaque image de référence modifiée.

L'invention porte également sur une image entrelacée issue d'une série d'au moins deux images de référence modifiées obtenues à partir d'au moins une image de référence, dont les couleurs ont été remplacées par les couleurs d'une palette de couleurs en effectuant avant ou entre chaque nouvelle image de référence modifiée un décalage circulaire des couleurs de la palette.

Un autre objet de l'invention consiste en une image iridescente comprenant une image entrelacée décrite précédemment ou obtenue par le procédé selon la première variante avantageuse décrit précédemment, mise en relation avec un sélecteur optique autostéréoscopique de préférence sélectionné dans le groupe comprenant un réseau de lentilles linéaires, un réseau de lentilles sphériques, une barrière parallaxe, un écran autostéréoscopique.

De préférence l'image entrelacée et l'image iridescente selon l'invention sont obtenues par le procédé selon la première variante avantageuse décrit précédemment.

Avantageusement, l'image iridescente décrite précédemment est au moins partiellement en 3D.

Un autre objet de l'invention consiste en une image iridescente en 3D issue d'une série d'images de référence modifiées obtenues à partir d'images de référence constituant un couple stéréoscopique, dont les couleurs ont été remplacées par des couleurs d'une palette de couleurs en effectuant avant ou entre chaque nouvelle image de référence modifiée un décalage circulaire des couleurs de la palette.

Un autre objet de l'invention consiste en une image de sécurité anti-contrefaçon comprenant une image entrelacée décrite précédemment ou obtenue par le procédé selon la première variante avantageuse décrit précédemment, ou une image iridescente décrite précédemment ou obtenue par le procédé décrit précédemment, ou une image iridescente en 3D décrite précédemment.

Un autre objet de l'invention consiste en une image iridescente en 3D comprenant au moins une image entrelacée décrite précédemment, ou obtenue par le procédé selon la deuxième variante avantageuse décrit précédemment, configurée pour être observée à travers un sélecteur optique non autostéréoscopique, et de préférence un stéréoscope ou des lunettes stéréoscopiques sélectionnées dans le groupe comprenant des lunettes utilisant des filtres colorés ou polarisants, des lunettes à obturation LCD, des lunettes prismatiques. On entend par image en 3D, une image qui est perçue en trois dimensions et qui peut être statique ou dynamique. Ainsi, le procédé selon la deuxième variante avantageuse décrit précédemment est applicable aux images statiques ou aux images dynamiques telles que celles du cinéma en 3D, de la télévision en 3D, des consoles de jeux en 3D, des téléphones en 3D, des ordinateurs en 3D, des jeux vidéo en 3D et d'une manière générale de toute interface virtuelle en 3D.

Un autre objet de l'invention consiste en un dispositif comprenant une image entrelacée telle que décrite précédemment ou obtenue par le procédé décrit précédemment, mise en relation avec un sélecteur optique autostéréoscopique de préférence sélectionné dans le groupe comprenant un réseau de lentilles linéaires, un réseau de lentilles sphériques, une barrière parallaxe.

Un tel dispositif peut être, de manière non limitative, une carte bancaire ou téléphonique, une vitrine, un emballage, une décoration, un marquage de vêtement ou de chaussure, une règle, un porte-clés, un flacon, une bouteille, une assiette, un verre, un vase, un abat-jour, une boîte, un bloc de verre gravé, un élément de communication tel qu'une carte commerciale, un dossier de presse, une plaquette, une enseigne, un marquage industriel, un produit d'édition tel qu'un poster, une carte postale, une carte de vœux, un marque-page, une couverture d'un classeur, d'un livre, d'un cahier ou d'un carnet, un bijou tel qu'un bracelet, un pendentif, une broche, le cadran d'une montre ou d'une horloge, un carrelage, un vitrage.

Un autre objet de l'invention consiste en un produit-programme informatique susceptible d'être chargé dans la mémoire d'une unité de commande telle qu'un ordinateur, comprenant des moyens de mise en œuvre du procédé selon la première ou selon la deuxième variante avantageuse décrit précédemment.

De préférence, lorsque le produit-programme informatique décrit précédemment comprend des moyens de mise en œuvre du procédé décrit précédemment, il comprend en outre des moyens de mise en œuvre d'une création d'images en 3D.

Ainsi, dans le cas où la ou les images de références sont issues d'un programme de création d'images 3D, la création de l'image de référence modifiée peut directement être généré par ledit programme en utilisant une palette de couleur pour les textures de tout ou partie des objets composant la scène et en effectuant un décalage circulaire des couleurs de la palette entre le calcul des deux images du couple.

Dans le cas d'images animées, générées ou non par un programme d'images 3D, le procédé ainsi décrit peut se cumuler avec un décalage circulaire de la palette jouant sur l'animation.

## BREVE DESCRIPTION DES FIGURES

D'autres caractéristiques, détails et avantages de l'invention ressortiront à la lecture de la description qui suit, en référence aux figures annexées, qui illustrent :

- la figure 1A, une palette de couleur permettant de créer une image iridescente selon l'invention ;
- la figure 1B, la palette de la figure 1 avec différents décalages circulaires des couleurs ;
- la figure 2, une image de référence ;
- la figure 3, une série de huit images de référence modifiées -IRM- dans lesquelles les couleurs de l'image de référence de la figure 2 sont remplacées par les couleurs de la palette de la figure 1A en effectuant entre chaque IRM un décalage circulaire des couleurs de la palette comme sur la figure 1B ;
- la figue 4, une image entrelacée obtenue à partir de la série d'images de référence modifiées de la figure 3 ;
- la figure 5, un schéma d'une vue en perspective d'une image entrelacée mise en relation avec un réseau de lentilles linéaires ;
- la figure 6, un schéma de l'image dispersée et du réseau de lentilles linéaires adapté de la figure 5 en vue de face.

Pour plus de clarté, les éléments identiques ou similaires sont repérés par des signes de référence identiques sur l'ensemble des figures.

## DESCRIPTION DETAILLEE DES MODES DE REALISATION :

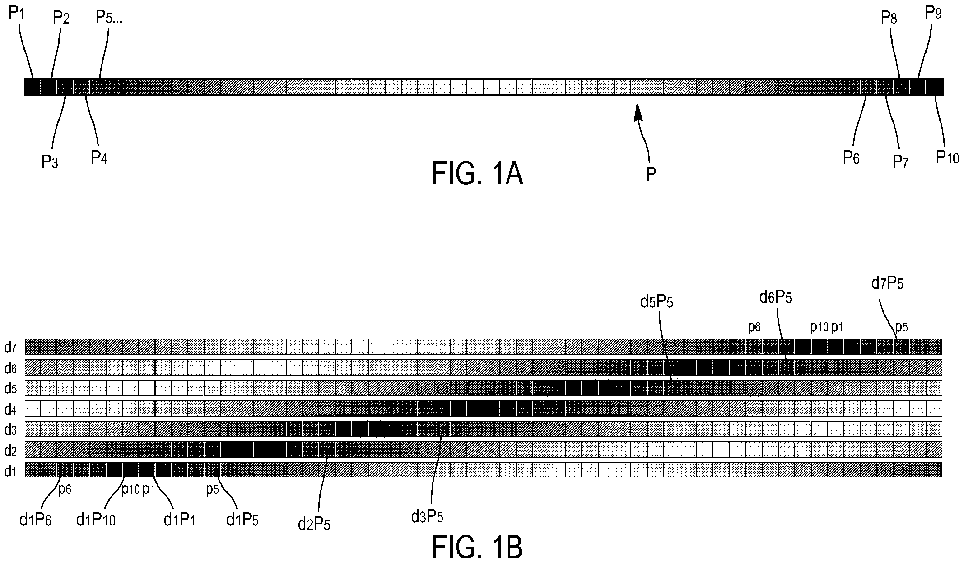

En se référant aux figures 1A, 1B, 2 et 3 la série d'images de référence modifiées IRM selon l'invention est avantageusement réalisée à partir d'une image de référence IR et d'une palette de couleurs P au moyen d'un programme informatique de traitement de l'image.

L'image de référence IR représente, aux couleurs près, ce qui sera vu dans l'image iridescente II. Une telle image de référence est par exemple une photo 4, un motif, un texte 2, 3, ou analogues.

De manière générale, la palette de couleurs définit les couleurs qui seront perçues dans les effets d'iridescence de l'image iridescente. La palette de couleur de la figure 1A contient ici un dégradé du noir au blanc sur sa première moitié et de blanc au noir sur sa seconde moitié. D'autres couleurs peuvent être éventuellement utilisées. Une telle palette ne comporte ici aucune zone de cassure franche de couleurs, pas même entre la première et la dernière couleur. Ceci permet d'obtenir un effet d'iridescence très lisse. Pour des raisons esthétiques il peut être également souhaité de définir les zones de cassure de couleurs dans la palette.

De manière intéressante, l'invention est réalisée sans nécessiter un repérage des couleurs à imprimer, et la palette de couleurs comprend soit une seule couche de couleur, en bitmap ou en niveaux de gris, soit deux couches de couleurs dont la plus claire a de préférence une valeur constante sur l'ensemble de ladite palette de couleur.

Selon une autre variante non représentée, l'invention est réalisée avec des moyens de repérage de couleurs, et la palette de couleurs comprend autant de couches de couleurs que le système de reproduction utilisé le permet, typiquement cyan magenta jaune noir (CMNJ) ou encore rouge vert bleu (RVB). On peut également utiliser une palette en RVB, générer des images de référence modifiées en RVB, les entrelacer, puis convertir l'image entrelacée en CMJN ; ou encore convertir les images de référence modifiées IRM ou toute autre combinaison de ce type.

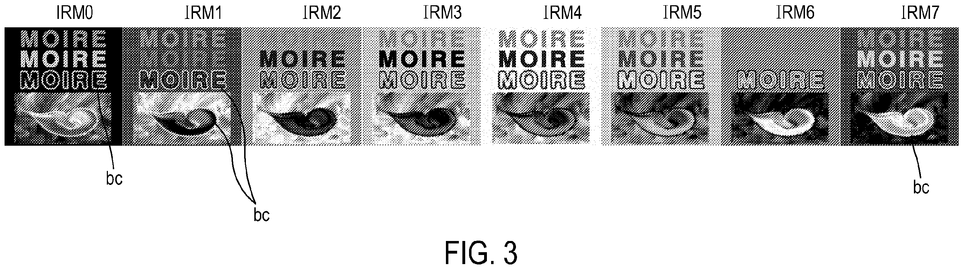

La série d'images de référence modifiées IRM de la figure 3 représente également ce qui sera perçue de l'image iridescente observée sous différents angles et permettant d'obtenir l'effet d'iridescence. De tels effets d'iridescence peuvent également être créés sur une image en 3D visible directement ou avec des lunettes 3D.

En se référant aux figures 1A, 1B, 2 et 3, on définit le nombre nCoulPalette de couleurs contenues dans la palette, puis on définit le nombre nIRM d'images de référence modifiées à calculer : nIRM est inférieur ou égal à la résolution du système de restitution divisé par la résolution du sélecteur optique utilisé, la série d'images de référence modifiées -IRM- est obtenue en remplaçant les couleurs de l'image de référence -IR- par les couleurs de la palette en effectuant entre chaque nouvelle IRM un décalage circulaire des couleurs de la palette (Palette shifting - Color cycling) détaillé ci-après.

Afin d'obtenir un cycle complet, la valeur de décalage circulaire DC à apporter à la palette avant ou entre chaque nouveau calcul d'une image de référence modifiée est donné par la formule :

$$DC = nCoulPalette / nIRM$$

Il peut également être intéressant à des fins esthétiques d'effectuer plus d'un cycle ou moins d'un cycle. Par la suite, on crée successivement

- une première image de référence modifiée IRM0 en remplaçant ses couleurs par celles de la palette de la figure 1A,

- une deuxième image de référence modifiée IRM1 en effectuant un premier décalage de palette comme sur la palette décalée d1 de la figure 1B,

- une troisième image de référence modifiée IRM2 en effectuant un deuxième décalage de palette comme sur la palette décalée d2 de la figure 1B,

et ainsi de suite jusqu'à la huitième image de référence modifiée IRM7.

Le décalage se fait de manière circulaire de sorte que les couleurs décalées de palette dp1 ...dp10... se succèdent et au-delà de la dernière couleur d1p10 se trouve la première couleur d1p1.

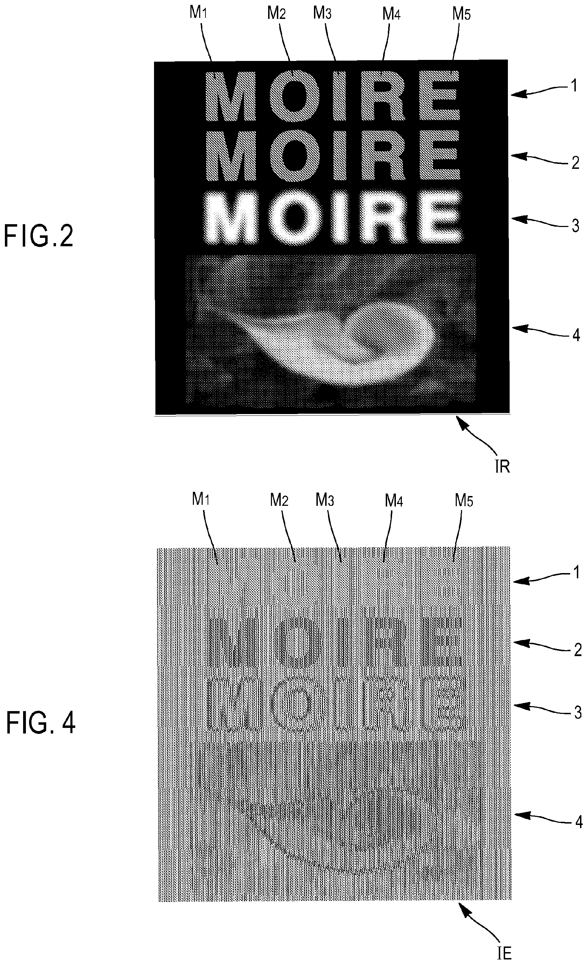

Au moins deux des images de référence modifiées obtenues peuvent ensuite être entrelacées pour former une image entrelacée selon l'invention. Ainsi, l'image entrelacée de la figure 4 est constituée des huit images de référence modifiées IRM 0-7.

L'image entrelacée obtenue à partir de la série d'images de référence modifiées par un entrelacement selon l'état de l'art comprenant les étapes -de redimensionnement horizontal de chaque IRM à la taille souhaitée pour l'image iridescente et à la résolution du sélecteur optique -SO-, -de création de l'image entrelacée -IE- en prenant successivement chaque colonne desdites images redimensionnées obtenues à l'étape précédente, d'adaptation de la taille verticale de l'image entrelacée obtenue à l'étape précédente à la taille souhaitée de l'image iridescente.

Avant la mise en forme de l'image entrelacée IE, il est préférable d'adapter précisément la taille de ladite image entrelacée IE en fonction du sélecteur optique SO utilisé et de la distance moyenne d'observation définie selon l'application envisagée. Le coefficient de modification de la taille se définit selon l'état de l'art bien connu (réglage du pitch) en mettant en relation un abaque avec le sélecteur optique SO dans les mêmes conditions que la mise en relation finale. L'abaque est constitué d'une image périodique avec une période basique, pixels noirs pixels blancs, et contient des zones avec différentes modifications de taille. Celle qui convient est celle qui permet un passage du noir au blanc très rapide lorsque l'observateur est placé à la distance moyenne définie et se déplace légèrement perpendiculairement aux lentilles.

L'image entrelacée -IE- est mise en relation avec un réseau de lentilles cylindriques SO pour réaliser une image iridescente.

L'application d'un flou à l'image de référence permet de visualiser une bordure caractéristique bc autour du dessin dans la série d'images de référence modifiées IRM de la figure 3 qui est également perceptible dans l'image entrelacée IE de la figure 4 et qui sera également visible dans l'image iridescente. Lorsqu'il n'y a pas d'application de flou dans l'image de référence, l'image entrelacée montre des ruptures nettes, et l'image iridescente ne montrera pas de bordure caractéristique essentiellement en raison de l'absence de flou dans l'image de référence.

En outre l'image iridescente montrera des effets visuels iridescents clairs, et sombres suivant l'angle de l'observation, et la zone de l'image observée comme illustré dans la figure 3.

L'image de référence IR de la figure 2 comprend un texte composé de cinq masques M1 à M5, un texte non flouté 2, un texte flouté 3 et une photo 4 en niveau de gris.

Selon une variante préférée, on peut utiliser un masque sur l'image de référence comme dans la figure 2 lors de la création des images de référence modifiées -IRM-. Celles-ci, comme sur la figure 3, ont ainsi été créées en faisant usage de cinq masques sur l'IR pour ménager des zones de réserve dont les couleurs n'ont pas été remplacées par celles de la palette et qui ne présenteront donc pas d'effet d'iridescence.

Selon une autre variante préférée, on peut également faire usage de masques dans l'image de référence pour utiliser plusieurs palettes de couleurs lors de la création des images de référence modifiées (non représentée).

L'utilisation d'un masque (non représenté) peut également consister à venir coller des éléments dans les images de référence modifiées -IRM- ou encore dans l'image entrelacée -IE- avant sa mise en forme.

- soit en remplacement total,

- soit avec une valeur d'opacité,

- soit encore en utilisant un mode de fusion.

Ces deux dernières utilisations permettent notamment d'obtenir sur une photo un mélange de la photo originale et de l'effet d'iridescence.

L'utilisation d'un masque (non représentée) peut également consister à venir appliquer un filtre colorimétrique sur les images de référence modifiées ou sur l'image entrelacée.

Selon une variante préférée (non représentée) on peut changer de palette de couleurs lors de la génération de la série des images de référence modifiées -IRM-.

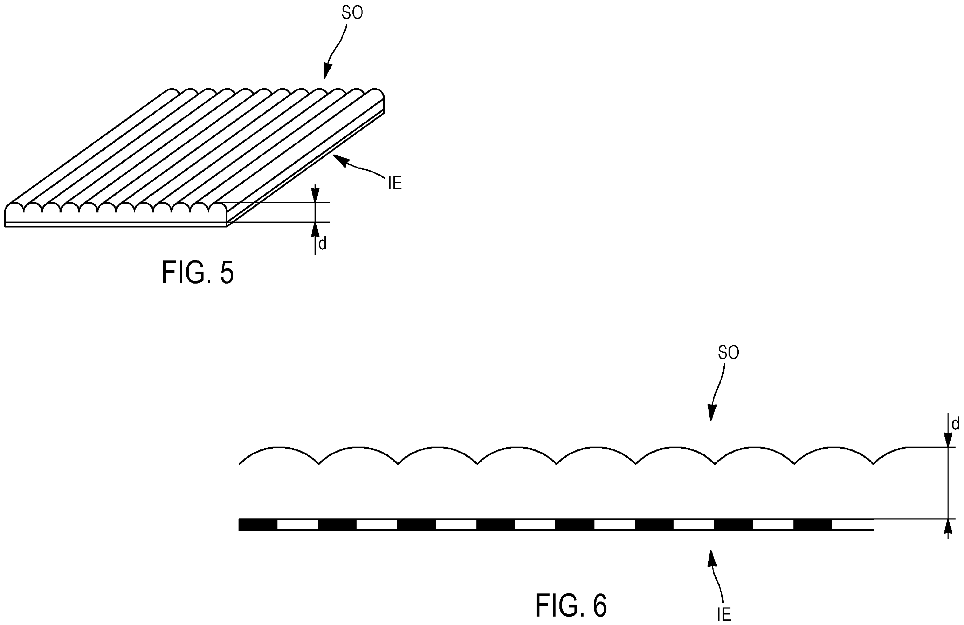

Les figures 5 et 6 illustrent un exemple de mise en relation d'un réseau de lentilles SO et une image entrelacée IE. L'image entrelacée IE est destinée à être par exemple imprimée sur la face opposée du réseau de lentilles SO ou contrecollée sur celle-ci. Un espacement -d- doit être prévu entre le réseau de lentilles et l'image entrelacée en fonction de la distance focale des lentilles cylindriques.

La mise en relation consiste à assembler l'image entrelacée avec le sélecteur optique SO afin d'obtenir l'image iridescente. Lorsque le sélecteur optique SO est constitué de lentilles (linéaires ou sphériques) l'image entrelacée IE doit se trouver sensiblement à la distance focale desdites lentilles. En général l'épaisseur des réseaux de lentilles que l'on trouve dans le commerce répond à cette exigence de sorte que l'image doit se trouver sur la face opposée aux lentilles (cf figures 5 et 6)

Lorsque le sélecteur optique SO est une barrière de parallaxe il convient de ménager une distance entre la barrière et l'image entrelacée IE. Pour obtenir un effet d'iridescence, c'est-à-dire pour que les deux yeux de l'observateur perçoivent des images différentes, il convient de veiller à ce que cette distance ne soit pas trop petite.

La création de l'image iridescente se fait par un procédé qui comprend des étapes consistant à :

(1) Créer l'image de référence IR comprenant des éléments tels qu'un dessin, une photo, un texte, un motif, etc,

(2) Créer une palette de couleurs qui représenteront les couleurs de l'effet d'iridescence dans l'image iridescente.

(3) Créer une série d'au moins deux « images de référence modifiées » IRM1, IRM2, IRMn, dans lesquelles les couleurs de l'image de référence -IR- sont remplacées par les couleurs de la palette en effectuant entre chaque nouvelle IRM un décalage circulaire des couleurs de la palette. Optionnellement il pourra être fait usage de masques pour utiliser plusieurs palettes de couleurs différentes ou pour préserver des zones qui ne présenteront pas d'effets d'iridescence, ou encore pour coller des éléments ou appliquer un filtre colorimétrique,

(4) Créer une image entrelacée -IE- à partir desdites images de référence modifiées -IRM-. Optionnellement il pourra être fait usage de masques pour coller des éléments ou appliquer un filtre colorimétrique,

(5) Réaliser l'image iridescente en mettant en relation l'image entrelacée -IE-avec le sélecteur optique qui peut consister en une impression directe sur la face du sélecteur optique opposée à l'observateur, une impression suivie d'un collage contre cette face, toute autre forme de reproduction.

Les moyens de réalisation des images de référence modifiées et de l'image entrelacée destinées à la réalisation de l'image iridescente selon l'invention, sont de préférence implémentés par ordinateur, à l'aide d'un logiciel de traitement de l'image. L'image entrelacée obtenue est ensuite générée et mise en relation avec un sélecteur optique de la manière développée précédemment.

Dans le cas de l'utilisation d'un réseau lenticulaire constitué de lentilles cylindriques ou d'une barrière de parallaxe constituée de lignes celles-ci doivent être verticales pour obtenir le meilleur effet d'iridescence. Cependant il peut être intéressant d'incliner les lignes ou les lentilles d'un angle alpha de 25 à 65 degrés. L'effet d'iridescence est alors toujours préservé et le support présente en plus l'avantage de s'animer lorsqu'il est pivoté de bas en haut.

Cette inclinaison peut s'obtenir par les étapes suivantes -d'inclinaison des images de référence modifiées -IRM- de alpha degrés, de création de l'image entrelacée -IE- à partir des images de référence modifiées inclinées créées à l'étape précédente, de création de l'image iridescente en mettant en relation l'image entrelacée -IE- créée à l'étape précédente avec le sélecteur optique SO. L'image iridescente se regardera alors en la ramenant de moins alpha degrés.

A noter que dans le cas d'une barrière de parallaxe mise en relation avec une image entrelacée on peut au choix décider de placer l'une ou l'autre devant ou derrière. Le réglage du pitch tiendra compte de ce choix.

L'invention ne se limite pas aux modes de réalisations exposés ci-dessus. Par exemple, de nombreuses combinaisons peuvent être envisagées sans sortir du cadre de l'invention.

## Revendications

1. Procédé mis en œuvre par ordinateur de fabrication d'une image iridescente à partir d'au moins une image de référence comprenant une fabrication d'une série d'images modifiées destinée à former une image iridescente à partir d'au moins une image de référence, **caractérisé en ce qu'**il comprend des étapes

    - de création d'une palette de couleurs (P),
    - de création d'une série d'au moins deux images de référence modifiées (IRMO, IRM1 , IRM2, IRMn...), dans laquelle les couleurs de ladite au moins une image de référence (IR) sont remplacées par les couleurs de la palette en effectuant avant ou entre chaque nouvelle image de référence modifiée (IRM) un décalage circulaire des couleurs de la palette, et
    - de création d'une image entrelacée à partir desdites au moins deux images de référence modifiées,
    - de création d'une image iridescente à partir de ladite image entrelacée, dans laquelle la série d'au moins deux images de référence modifiées dans ladite image entrelacée est mise en relation avec un sélecteur optique permettant à un observateur de percevoir avec ses deux yeux des images différentes de ladite série.

2. Procédé selon la revendication 1, **caractérisé en ce qu'**il comprend en outre une étape d'application d'un flou sur tout ou partie de ladite au moins une image de référence, avant l'étape de création des images de référence modifiées (IRM).

3. Procédé selon la revendication 1 ou 2, **caractérisé en ce que** l'étape de création desdites images de référence modifiées (IRM) est réalisée au moyen d'au moins un masque couvrant au moins une partie de l'image de référence.

4. Procédé selon l'une des revendications 1 à 3, **caractérisé en ce que** les couleurs de la palette de couleurs représentent soit une seule couche de couleur, en bitmap ou en niveau de gris, soit deux couches de couleurs dont la plus claire a une valeur constante sur l'ensemble de ladite palette de couleurs, soit trois couches rouge vert bleu, soit quatre couches cyan magenta jaune noir.

5. Procédé selon l'une des revendications 1 à 4, **caractérisé en ce que** la série d'images de référence modifiées est configurée pour être observée à travers un sélecteur optique non autostéréoscopique de préférence sélectionné dans le groupe comprenant un stéréoscope ou des lunettes stéréoscopiques sélectionnées dans le groupe comprenant des lunettes utilisant des filtres colorés ou polarisants, des lunettes à obturation LCD, des lunettes prismatiques.

6. Procédé selon l'une des revendications 1 à 5, **caractérisé en ce qu'**il comprend une étape de création d'au moins deux images de référence à partir d'une série d'images de préférence sélectionnées dans le groupe comprenant une série multiscopique, une animation, et l'étape de création d'une série d'images de référence modifiées est alors réalisée sur chacune desdites au moins deux images de référence pour créer pour chacune d'elles au moins une image de référence modifiée.

7. Procédé selon l'une des revendications 1 à 6, **caractérisé en ce qu'**il comprend en outre une étape de mise en relation de l'image entrelacée avec un sélecteur optique autostéréoscopique pour obtenir une image iridescente, le sélecteur autostéréoscopique étant de préférence sélectionné dans le groupe comprenant un réseau de lentilles cylindriques, un réseau de lentilles sphériques, une barrière de parallaxe, un écran autostéréoscopique.

8. Produit-programme d'ordinateur susceptible d'être chargé dans la mémoire d'une unité de commande telle qu'un ordinateur, comprenant des moyens de code de programme enregistrés sur un support lisible par un ordinateur, pour mettre en œuvre les étapes du procédé selon l'une des revendications 1 à 7 lorsque ledit programme fonctionne sur un ordinateur.

9. Produit-programme d'ordinateur selon la revendication 8, **caractérisé en ce qu'**il comprend en outre des moyens de code de programme enregistrés sur un support lisible par un ordinateur, pour mettre en œuvre une création d'images 3D lorsque ledit programme fonctionne sur un ordinateur.

**Patentansprüche**

1. Rechnergestütztes Verfahren zur Erstellung eines irisierenden Bildes aus mindestens einem Referenzbild, umfassend Erstellen einer Reihe modifizierter Bilder zur Bildung eines irisierenden Bildes aus mindestens einem Referenzbild, **dadurch gekennzeichnet, dass** es die Schritte umfasst:

   - Erstellen einer Farbpalette (P),
   - Erstellen einer Reihe aus mindestens zwei modifizierten Referenzbildern (IRMO, IRM1, IRM2, IRMn...), wobei die Farben des mindestens einen Referenzbildes (IR) durch die Farben der Palette ersetzt werden, indem vor oder zwischen jedem modifizierten Referenzbild (IRM) eine kreisförmige Verschiebung der Farben der Palette vorgenommen wird, und
   - Erstellen eines verschachtelten Bildes aus den mindestens zwei modifizierten Referenzbildern,
   - Erstellen eines irisierenden Bildes aus dem verschachtelten Bild, wobei die Reihe von mindestens zwei modifizierten Referenzbildern im verschachtelten Bild einem optischen Selektor zugeordnet wird, der es einem Betrachter ermöglicht, mit dessen Augen unterschiedliche Bilder der Reihe wahrzunehmen.

2. Verfahren nach Anspruch 1, **dadurch gekennzeichnet, dass** es ferner umfasst: Anwenden einer Unschärfe auf das mindestens eine Referenzbild oder einen Teil davon vor dem Erstellen der modifizierten Referenzbilder (IRM).

3. Verfahren nach Anspruch 1 oder 2, **dadurch gekennzeichnet, dass** das Erstellen der modifizierten Referenzbilder (IRM) mittels mindestens einer Maske erfolgt, die mindestens einen Teil des Referenzbildes deckt.

4. Verfahren nach einem der Ansprüche 1 - 3, **dadurch gekennzeichnet, dass** die Farben der Farbpalette eine einzige Farbschicht als Bitmap oder Graustufe oder zwei Farbschichten, wobei die hellste Schicht über die gesamte Farbpalette einen konstanten Wert aufweist, oder drei Rot-Grün-Blau-Schichten oder vier Cyan-Magenta-Gelb-Schwarz-Schichten darstellen.

5. Verfahren nach einem der Ansprüche 1 - 4, **dadurch gekennzeichnet, dass** die Reihe von modifizierten Referenzbildern derart konfiguriert ist, dass sie über einen nicht autostereoskopischen optischen Selektor betrachtet wird, der vorzugsweise aus der Gruppe gewählt wird, die ein Stereoskop oder eine Stereoskopbrille umfasst, die aus der Gruppe gewählt wird, die eine Brille mit Farb- oder Polarisationsfilter, eine Brille mit LCD-Verschluss, eine Prismenbrille umfasst.

6. Verfahren nach einem der Ansprüche 1 - 5, **dadurch gekennzeichnet, dass** es umfasst: Erstellen von mindestens zwei Referenzbildern aus einer Reihe von Bildern, die vorzugsweise aus folgender Gruppe gewählt sind: eine multiskopische Reihe, eine Animation, wobei das Erstellen einer Reihe von modifizierten Referenzbildern dann an jedem der mindestens zwei Referenzbildern ausgeführt wird, um für jedes mindestens ein modifiziertes Referenzbild zu erstellen.

7. Verfahren nach einem der Ansprüche 1 - 6, **dadurch gekennzeichnet, dass** es ferner umfasst: Zuordnen des verschachtelten Bildes zu einem autostereoskopischen optischen Selektor, um ein irisierendes Bild zu erhalten, wobei der autostereoskopische Selektor vorzugsweise aus folgender Gruppe gewählt ist: eine Zylinderlinsenanordnung, eine sphärische Linsenanordnung, eine Parallaxschranke, ein autostereoskopischer Bildschirm.

8. Computerprogrammprodukt, das in den Speicher einer Steuereinheit, z.B. eines Computers, geladen werden kann, umfassend Programmcodemittel, die auf einem computerlesbaren Datenträger gespeichert sind, um bei Ausführung des Programms auf einem Computer die Schritte des Verfahrens nach einem der Ansprüche 1 - 7 auszuführen.

9. Computerprogrammprodukt nach Anspruch 8, **dadurch gekennzeichnet, dass** es Ferner Programmcodemittel, die auf einem computerlesbaren Datenträger gespeichert sind, um bei Ausführung des Programms auf einem Computer eine 3D-Bilderstellung durchzuführen.

**Claims**

1. A computer-implemented method for producing an iridescent image from at least one reference image comprising a production of a series of modified images intended to form an iridescent image from at least one reference image, **characterized in that** it comprises the steps of

- creating a palette of colours (P),
- creating a series of at least two modified reference images (IRMO, IRM1, IRM2, IRMn...), in which the colours of said at least one reference image (IR) are replaced by the colours of the palette by effecting, before or between each new modified reference image (IRM), a circular shift of the colours of the palette, and
- creating an interlaced image from said at least two modified reference images,
- creating an iridescent image from said interlaced image, in which the series of at least two modified reference images in said interlaced image is put in relationship with an optical selector enabling an observer to perceive, with his two eyes, different images in said series.

2. The method according to claim 1, **characterized in that** it also comprises a step of applying a fuzziness to all or part of said at least one reference image, before the step of creating the modified reference images (IRM).

3. The method according to claim 1 or 2, **characterized in that** the step of creating said modified reference images (IRM) is performed by means of at least one mask covering at least part of the reference image.

4. The method according to one of claims 1-3, **characterized in that** the colours of the palette of colours represent either a single layer of colour, in bitmap or grey level, or two layers of colours the lightest of which has a constant value over the whole of said palette of colours, or three red-green-blue layers, or four cyan-magenta-yellow-black layers.

5. The method according to one of claims 1-4, **characterized in that** the series of modified reference images is configured to be observed through a non-autostereoscopic optical selector preferably selected from the group comprising a stereoscope or stereoscopic spectacles selected from the group comprising spectacles using coloured or polarizing filters, LCD shutter spectacles or prismatic spectacles.

6. The method according to one of claims 1-5, **characterized in that** it comprises a step of creating at least two reference images from a series of images preferably selected from the group comprising a multiscopic series, an animation, and the step of creating a series of modified reference images is then performed on each of said at least two reference images in order to create for each of them at least one modified reference image.

7. The method according to one of claims 1-6, **charac-**

**terized in that** it also comprises a step of putting the interlaced image in relationship with an autostereoscopic optical selector in order to obtain an iridescent image, the autostereoscopic selector being preferably selected from the group comprising an array of cylindrical lenses, an array of spherical lenses, a parallax barrier, an autostereoscopic screen.

8. A computer program product able to be loaded into the memory of a control unit such as a computer, comprising program code means recorded on a computer-readable medium, for implementing the steps of the method according to one of claims 1-7 when said program runs on a computer.

9. The computer program product according to claim 8, **characterized in that** it further comprises program code means recorded on a computer-readable medium, for implementing a 3D image creation when said program runs on a computer.

FIG. 1A

FIG. 1B

EP 2 718 901 B1

FIG.2

M1  M2  M3  M4  M5

1
2
3

4

IR

FIG. 4

M1  M2  M3  M4  M5

1
2
3

4

IE

FIG. 3

FIG. 5

FIG. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1147878 A
- EP 1195721 A
- US 20030103061 A

**Littérature non-brevet citée dans la description**

- Color table animation. **SHOUP R. G.** Computer Graphics. ACM, vol. 2, 8-13
- **KOOIMA R. L. et al.** A GPU sub-pixel algorithm for autostereoscopic virtual reality. *Virtual reality conference,* 2007, 131-137